Europäisches Patentamt

European Patent Office

Office européen des brevets

(11) Veröffentlichungsnummer : **0 109 451**
**B1**

(12) # EUROPÄISCHE PATENTSCHRIFT

(45) Veröffentlichungstag der Patentschrift :
28.05.86

(21) Anmeldenummer : 82110614.3

(22) Anmeldetag : 18.11.82

(51) Int. Cl.⁴ : **F 16 C   3/02, F 16 D   1/06**

(54) Antriebswelle mit rohrförmigem Wellenstück aus faserverstärktem Kunststoff und endseitig festgeklebten Armaturen.

(43) Veröffentlichungstag der Anmeldung :
30.05.84 Patentblatt 84/22

(45) Bekanntmachung des Hinweises auf die Patenterteilung : 28.05.86 Patentblatt 86/22

(84) Benannte Vertragsstaaten :
FR GB IT

(56) Entgegenhaltungen :
DE-A-    29 093
FR-A- 2 434 300
GB-A- 1 018 530
GB-A- 2 071 812
US-A- 3 393 533
US-A- 4 041 599
US-A- 4 248 062

(73) Patentinhaber : **Felten & Guilleaume Energietechnik
GmbH
Schanzenstrasse 24-30 Postfach 80 50 01
D-5000 Köln 80 (DE)**

(72) Erfinder : **Federmann, Helmut, Dr.
Holunderweg 17
D-5060 Berg. Gladbach (DE)**
Erfinder : **Bausch, Joachim, Dr.-Ing.
Auf den Rotten 44a
D-5253 Lindlar (DE)**

## Beschreibung

Die Erfindung betrifft eine Antriebswelle, insbesondere Gelenkwelle, nach dem Oberbegriff des Anspruchs 1. Sie findet besonders Anwendung bei Gelenkwellen wie Kardanwellen oder dgl. für Motorfahrzeuge.

Aus EP-A-00 29 093 ist eine Antriebswelle mit rohrförmigem Hauptteil aus faserverstärktem Kunststoff und daran vorragend festgelegten Endstücken aus Metall bekannt, mit denen je ein Jochteil eines Kreuzgelenkes oder dgl., gegebenenfalls über ein Adapterteil, verschweißt ist. Neben einer besonderen Anordnung der Fasern der einzelnen Lagen des Wellenhauptteiles, ist jedes der Endstücke dieser Welle als rotationssymmetrisches Ringteil mit einem Hülsenfortsatz ausgebildet, welcher in dem betreffenden Endabschnitt des Hauptteiles verankert sowie von diesem fest umschlossen ist, so daß an jedem Ende des Hauptteiles der Welle allein der Ringteil jedes seiner metallenen Endstücke vorragt.

Diese bekannte Welle kann einschließlich der in ihren Endbereichen festgelegten Endstücke auf wirtschaftliche Weise auf einem daraus ausziehbaren und wiederholt verwendbaren Wickeldorn erstellt, und hiernach im Bereich der äußeren Randzone jedes ihrer metallenen Endstücke mit beliebig gestalteten bzw. bemessenen Anschlußteilen aus Metall, z. B. Jochteil eines Kreuzgelenkes, durch umfängliche Schweißung fest und dauerhaft verbunden werden. Dies bedingt zugleich aber auch den Nachteil, daß die Schweißverbindung der Anschlußteile mit besonderer Sorgfalt durchgeführt werden muß, um ein Verziehen der in den Endbereichen festgelegten Endstücke als Folge von unterschiedlichen Schweißspannungen zu vermeiden und die Zentrizität und den ruhigen Lauf der Welle zu gewährleisten. Dadurch erhöht sich aber der Fertigungsaufwand dieser Welle in erheblichem Maße.

Andererseits ist aus US-A-4 041 599 ein Verfahren zum genauen Zentrieren und sicheren Festkleben des stangenförmigen Fortsatzes einer Armatur, z. B. Teil eines Kreuzgelenkes, aus Metall unmittelbar im Endbereich eines Wellenstückes aus faserverstärktem Kunststoff bekannt geworden. Dieses besteht im wesentlichen darin, daß auf den Fortsatz der zentriert festzuklebenden Armatur vor deren Einführung in das Wellenende zwei elastische Dichtringe im Abstand voneinander aufgebracht werden, so daß beim Einführen des so bestückten Armaturenfortsatzes ein flüssig einzubringendes, härtbares Klebemittel auf Epoxiharz-Basis von einer das Wellenende umgebenden trichterenförmigen Füllanordnung in den so gebildeten Ringspalt zwischen der Außenfläche des Armaturenfortsatzes und der Innenfläche des vorgefertigten Hohlwellenstückes eingesaugt wird, wobei der Spaltraum durch die elastischen Ringe zu beiden Seiten umfänglich abgedichtet wird. Diese elastischen Dichtringe halten zugleich die Armatur während der nachfolgenden Härtung des Klebemittels in der konzentrischen Lage im Inneren des betreffenden Wellenstückendbereiches aus dem faserverstärkten Kunststoff.

Bei einer so angefertigten Welle, die ebenfalls die Vorteile eines geringen Gewichtes und großer Steifigkeit und mechanischer Festigkeit ihres rohrförmigen Wellenstückes aus faserverstärktem Kunststoff aufweist, erübrigt sich auch das Anschweissen der Armaturen, so daß durch unterschiedliche Schweißspannungen hervorgerufene Unregelmäßigkeiten ausgeschlossen sind.

Diese Welle besitzt jedoch nur relativ geringe mechanische Festigkeit, insbesondere Dauerwechselfestigkeit, in ihren Endbereichen und ist daher für die Übertragung großer Drehmomente besonders bei variabler Belastung, wie dies z. B. bei Fahrzeugantrieben unvermeidbar ist, völlig ungeeignet. Die Anwendung dieses bekannten Klebeverfahrens ist überdies für eine wirtschaftliche Fertigung der Welle zu arbeitsaufwendig.

Andere unmittelbare Endteilklebungen scheiterten bisher an den Schwierigkeiten der gleichmäßigen Verteilung des Klebstoffes bei dünnem Auftrag desselben sowie an der mangelnden Konzentrizität der so festgeklebten Endteile mit dem vorgefertigten Wellenstück. Das unmittelbare Festwickeln von mit der Armatur endstückig vorgefertigten ringförmigen Endstücken aus Metall bei der Herstellung des Wellenhauptteiles aus faserverstärktem Kunststoff erhöht hingegen den Fertigungsaufwand, wegen der Notwendigkeit des Einsatzes sogenannter « verlorener » Dorne beim Wickeln.

Der Erfindung liegt die Aufgabe zugrunde, eine Welle dieser Art mit in ihren Endbereichen genau zentrisch festgeklebten Armaturen zu schaffen, die zur Übertragung großer Drehmomente bei wechselnder Belastung geeignet und mit vergleichsweise geringem Aufwand herstellbar ist.

Diese Aufgabe wird durch die mit den Merkmalen des Anspruchs 1 gekennzeichnete Erfindung gelöst.

Vorteilhafte Weiterbildungen der Erfindung sind mit den Unteransprüchen 2 bis 7 angegeben, von welchen der Anspruch 2 eine bevorzugte Ausbildung des Endstückes und dessen Einbindung in den Hauptwellenendbereich betrifft, und die Ansprüche 3 und 4 Ausführungsvarianten des Armaturenfortsatzes betreffen. Die Ansprüche 5 und 6 oder 7 beziehen sich auf für die Klebeschicht bzw. die Endstücke bevorzugte Werkstoffe.

Der wesentliche Vorteil der Erfindung liegt in der Schaffung einer mit geringem Aufwand herzustellenden und mit den Armaturen fest und dauerhaft verbundenen Antriebswelle aus faserverstärktem Kunststoff, die über ihre gesamte Länge einschließlich der Übergänge zu den aus Metall bestehenden Armaturen die für Übertragung großer Kräfte und Drehmomente notwendige mechanische Festigkeit aufweist. Weitere Vorteile liegen in der genau zentrierten Befestigung ihrer Armaturen in den Endbereichen des rohrförmigen Wellenstückes durch einfache Klebung, welche dennoch den ruhigen Lauf der Welle und deren große mechanische Festigkeit auch in den Übergangsbereichen gewährleistet, sowie in der Vermeidung der Nachteile, welche sich aus der Schweißverbindung der Armaturen ergeben, bei gleichzeitiger Beibehaltung des Vorteiles einer nachträglichen Zurüstung der Welle für bestimmte Verwendungen aus den in großen Stückzahlen vorgefertigten Teilen derselben.

Wesentlich ist hierzu, daß der Fortsatz jeder der in den Wellenendbereichen festgeklebten Armaturen mit achsparallelen Vorsprüngen ausgebildet, und zwischen dem Armaturenfortsatz und dem Endbereich ein ringförmiges Endstück mit den Vorsprüngen des Fortsatzes entsprechenden Vertiefungen seiner Innenfläche angeordnet ist, das in dem faserverstärkten Kunststoff des Wellenstückes fest verhaftet, und an dessen Innenfläche die betreffende Armatur mit ihrem Fortsatz geklebt ist. Dadurch ergibt sich nämlich die zwangsläufige Drehmomentenübertragung von dem Wellenstück aus faserverstärktem Kunststoff über die darin fest eingebundenen Endstücke und deren Vertiefungen auf die Vorsprünge des Fortsatzes jeder Armatur, ohne nennenswerte Beanspruchung der die Endstücke mit den Armaturfortsätzen fest verbindenden Klebung und bei formschlüssig festgelegter, genau zentrischer Lage der Endstücke in den an den beiden Wellenendbereichen genau zentrisch fest verhafteten Endstücken. Diese werden in großen Stückzahlen vorgefertigt, vor dem Wickelvorgang im jeweils erforderlichen Abstand auf einen Wickeldorn geschoben und so festgewickelt, daß sie nach dem Härten der Welle und Abziehen derselben vom Dorn praktisch einstückige Teile derselben bilden. In diese werden schließlich je nach Bedarf die Armaturen mit ihren zuvor mit dem Klebemittel beschichteten Fortsatz eingeführt und darin festgeklebt.

Nachstehend ist die Erfindung anhand von in der Zeichnung veranschaulichten Ausführungsbeispielen näher erläutert. Es zeigen :

Figur 1 teilweise im Län-gsschnitt den Endbereich einer Antriebswelle mit festgeklebter Armatur,

Figur 2 ähnlich wie in Fig. 1 eine andere Ausführungsform der Antriebswelle,

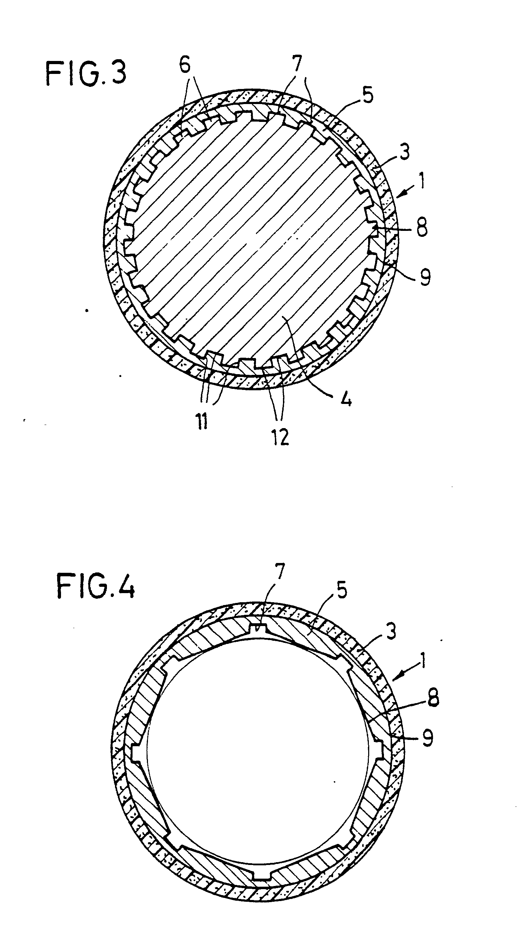

Figur 3 einen Querschnitt nach A-B durch die Antriebswelle der Fig. 1 und

Figur 4 in Stirnansicht den Endbereich einer anderen Ausführungsform der Antriebswelle, ohne Armatur.

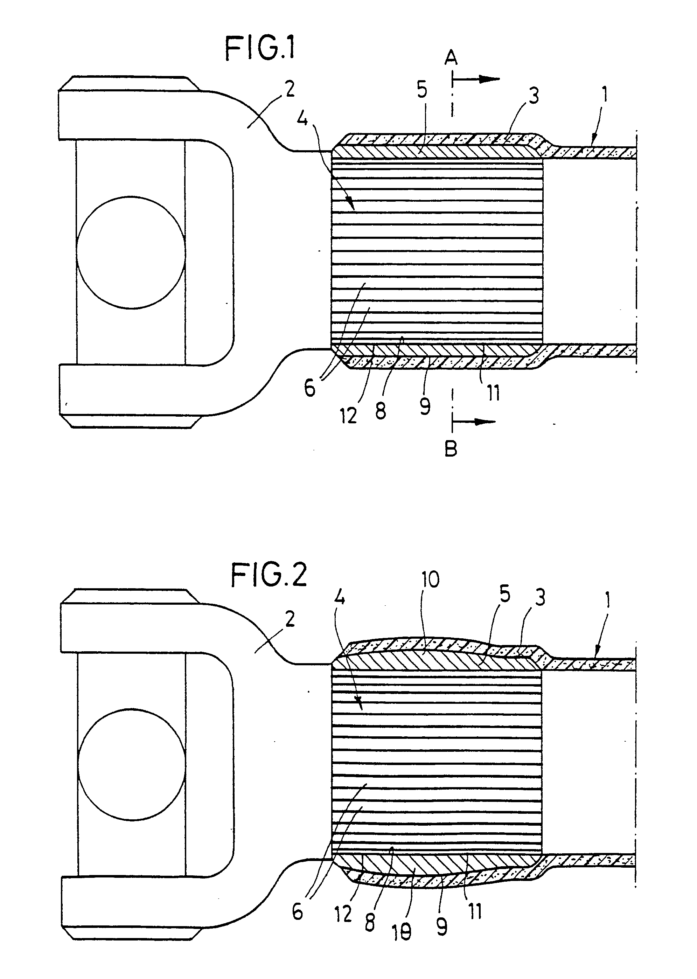

Wie insbesondere aus den Fig. 1 und 2 ersichtlich ist, weist die gezeigte Antriebswelle in allen Ausführungsformen derselben ein rohrförmiges Wellenstück 1 aus faserverstärktem Kunststoff auf, in dessen Endbereichen 3 je ein ringförmiges Endstück 5, z. B. aus einem Metall wie Stahl oder Aluminium, dauerhaft festgelegt ist, indem es vor dem Härten in die Faserwicklungen des Wellenstückes 1 bei dessen Fertigung in Wickeltechnik eingebunden und darin fest verhaftet ist. Bei der in Fig. 2 gezeigten Ausführungsform der Welle ist das bzw. jedes Endstück 5 in den betreffenden Endbereich des Wellenstückes 1 kraft- und formschlüssig eingebunden und hierzu an seiner Außenfläche 9 mit wenigstens einem umfänglichen Wulst 10 ausgebildet. Dies bringt den Vorteil einer besonders starken und sicheren Befestigung der Endstücke 5 in den Wellenendbereichen 3 mit sich, welche au-ch hohen Zugbeanspruchungen zu widerstehen vermag.

Bei allen Ausführungsformen der Welle ist in jedem Endbereich 3 derselben, nämlich in den dort festgelegten Endstücken 5 eine mit einem Fortsatz 4 einstückige Armatur 2 aus Metall mittels je einer zwischen der Außenfläche 12 jedes Fortsatzes 4 und der Innenfläche 8 jedes Endstückes 5 angeordneten dünnen Klebeschicht 11, beispielsweise aus einem Kunstharz auf Epoxidbasis festgeklebt. Die so an der Welle endseitig festgeklebten Armaturen können in beliebiger Weise z. B. als Teil eines Kreuzgelenkes, Kupplungs- oder Flanschteil oder auch als profilierter Wellenstummel ausgebildet sein.

Wesentlich für die dauerhafte Drehfestigkeit sowie die Biegewechselfestigkeit der Welle an ihren Klebverbindungen mit den endseitig angeschlossenen Armaturen 2 ist die Ausbildung des zylindrischen oder im wesentlichen polygonen — sowie vorzugsweise auch gegen das freie Ende leicht konisch verjüngten — Fortsatzes 4 jeder Armatur 2 mit achsparallelen Vorsprungen 6, entsprechend der in gleicher Weise gestalteten sowie mit desgleichen in der Achsrichtung verlaufenden Vertiefungen 7 ausgebildeten Innenfläche 8, jedes der Endstücke 5. Diese achsparallelen Vorsprünge 6 und Vertiefungen 7, welche an jedem Fortsatz 4 bzw. Endstück 5 vorzugsweise einwärts, d. h. gegen das Innere des sie umfassenden Wellenstückes 1 aus faserverstärktem Kunststoff, verjüngt ausgebildet sind, bewirken beim Einsetzen des mit dem Klebemittel beschichteten Armaturenfortsatzes 4 in das Innere des betreffenden Wellenendstückes 5 eine genaue konzentrische Führung und zentrische Lage der betreffenden Armatur 2 auch während der nachfolgenden Härtung des Klebemittels, und zugleich dessen gleichmäßige Verteilung an der Innenfläche 8 jedes Endstückes 5. Darüber hinaus entlasten diese — vorzugsweise als profilierte Rippen bzw. Nuten ausgebildeten — Vorsprünge 6 und Vertiefungen 7 beim Einsatz der Welle für die Kraftübertragung, z. B. vom Motor auf das Fahrwerk eines Kraftfahrzeuges, zufolge ihres Formschlusses die an sich nur kraftschlüssigen Klebeverbindungen mittels der dünnen Klebeschicht 11 von den sich häufig ändernden Scherbeanspruchungen. Dadurch können mit dieser Welle langzeitig auch sehr große Drehmomente problemlos übertragen werden, wobei die Festigkeit der Klebeschichten 11 im wesentlichen nur durch in der Achsrichtung der Welle wirksame Kräfte beansprucht wird.

Wie zuvor erwähnt, können der Fortsatz zumindest einer Armatur 2 sowie der Bohrungsquerschnitt des betreffenden Wellenendstückes in der gleichen Weise polygon, z. B. oktagonal, und/oder konisch gestaltet sein, mit dem Vorteil einer vereinfachten Fertigung bzw. Zentrierung dieser Teile sowie einer noch besseren Verteilung des alle Spalträume zwischen der Innenfläche 8 jedes Endstückes 5 und der Außenfläche 12 jedes Armaturenfortsatzes 4 ausfüllenden Klebemittels, in welche dieses bei einwärts verjüngter konischer Ausbildung derselben hineingedrückt wird.

Für eine wirtschaftliche Fertigung dieser Welle ist es besonders vorteilhaft, wenn jedes Endstück 5 aus einem gieß- oder spritzbaren Kunststoff besteht, so daß es mit geringem Arbeitsaufwand in großen Stückzahlen vorgefertigt, und in der vorausgehend beschriebenen Weise auf einen Wickeldorn in das Wellenstück 1 beiderends eingebunden werden kann, wobei ihm durch den es umschließenden Endbereich 3 zusätzliche mechanische Festigkeit verliehen wird. Für die Herstellung dieser Endstücke 5 eignen sich verschiedene duroplastische oder thermoplastische Kunststoffe bzw. -gemische, beispielsweise Propylenpolymere bzw. -copolymere, die nach ihrer Ausformung bzw. Härtung ausreichende Formstabilität und mechanische Festigkeit besitzen. Das Endstück kann auch aus einem Metall, z. B. Stahl oder Aluminium, bestehen.

Die beschriebene Welle läßt sich auf besonders wirtschaftliche Weise herstellen und weist in hervorragendem Maße alle gewünschten Eingenschaften auf, so daß sie für den langzeitigen Betrieb zur Übertragung großer Kräfte gut geeignet ist.

**Patentansprüche**

1. Antriebswelle, insbesondere Gelenkwelle, mit einem rohrförmigen Wellenstück (1) aus faserverstärktem Kunststoff und endseitig festgeklebten Armaturen (2) aus Metall, deren jede einen in den betreffenden Endbereich (3) des Wellenstückes (1) ragenden, zum Festkleben der Armatur (2) eingerichteten, Fortsatz (4) aufweist, dadurch gekennzeichnet, daß der Fortsatz (4) mit achsparallelen Vorsprüngen (6) ausgebildet, und zwischen dem Armaturenfortsatz (4) und dem Endbereich (3) ein ringförmiges Endstück (5) mit den Vorsprüngen (6) des Fortsatzes (4) entsprechenden Vertiefungen (7) seiner Innenfläche (8) angeordnet ist, das in dem faserverstärkten Kunststoff des Wellenstückes (1) fest verhaftet, und an dessen Innenfläche (8) die betreffende Armatur (2) mit ihrem Fortsatz (4) geklebt ist.

2. Antriebswelle nach Anspruch 1, dadurch gekennzeichnet, daß jedes Endstück (5) in den betreffenden Endbereich (3) des Wellenstückes (1) kraft- und formschlüssig eingebunden und hierzu an seiner Außenfläche (9) mit wenigstens einem umfänglichen Wulst (10) ausgebildet ist.

3. Antriebswelle nach Anspruch 1 oder 2, dadurch gekennzeichnet, daß der Fortsatz (4) zumindest einer Armatur (2) und der Bohrungsquerschnitt des betreffenden Wellenendstückes (5) in gleicher Weise polygon, beispielsweise oktagonal gestaltet sind.

4. Antriebswelle nach einem der Ansprüche 1 bis 3, dadurch gekennzeichnet, daß die Vorsprünge (6) jedes Fortsatzes (4) und/oder die Vertiefungen jedes Wellenendstückes (5) einwärts verjüngt ausgebildet sind.

5. Antriebswelle nach einem der Ansprüche 1 bis 4, dadurch gekennzeichnet, daß zwischen der Außenfläche (12) jedes Fortsatzes (4) und der Innenfläche (8) jedes Endstückes (5) eine aus einem Kunstharz auf Epoxidbasis bestehende, dünne Klebeschicht (11) angeordnet ist.

6. Antriebswelle nach einem der Ansprüche 1 bis 5, dadurch gekennzeichnet, daß jedes Endstück (5) aus einem Metall, z. B. Stahl oder Aluminium, besteht.

7. Antriebswelle nach einem der Ansprüche 1 bis 5, dadurch gekennzeichnet, daß jedes Endstück (5) aus einem gieß- oder spritzbaren Kunststoff besteht.

**Claims**

1. A drive shaft, more particularly a universal-joint propeller shaft, having a tubular shaft part (1) made of fibre-reinforced plastics material, and adhesively secured end fittings (2) made of metal, each comprising an extension (4), which projects into the respective end region (3) of the shaft part (1) and which is adapted to adhesively secure the fitting (2), characterised in that the extension (4) is formed with axially parallel projections (6), and an annular end part (5) having recesses (7) on its inner surface (8) corresponding to the projections (6) of the extension (4) is arranged between the fitting extension (4) and the end region (3), which end part (5) is lodged securely in the fibre-reinforced plastics material of the shaft part (1), and to the inner surface (8) of which the respective fitting (2) with its extension (4) is adhered.

2. A drive shaft according to claim 1, characterised in that each end part (5) is frictionally- and form-locked in the respective end region (3) of the shaft part (1), and for this purpose has formed on its outer surface (9) at least one peripheral bead (10).

3. A drive shaft according to claim 1 or 2, characterised in that the extension (4) of at least one fitting (2) and the cross-section of the bore of the respective shaft end part (5) are similarly formed in the shape of a polygon, e. g. an octagon.

4. A drive shaft according to any one of claims 1 to 3, characterised in that the projections (6) of each extension (4) and/or the recesses of each shaft end part (5) are formed such that they become narrower towards the inside.

5. A drive shaft according to any one of claims 1 to 4, characterised in that a thin adhesive layer (11) of an epoxy-based synthetic resin is disposed between the outer surface (12) of each extension (4) and the inner surface (8) of each end part (5).

6. A drive shaft according to any one of claims 1 to 5, characterised in that each end part (5) is made from a metal, e. g. steel or aluminium.

7. A drive shaft according to any one of claims 1 to 5, characterised in that each end part (5) is made from a plastics material which is capable of being cast or injection-moulded.

**Revendications**

1. Arbre d'entraînement, notamment arbre articulé, comprenant une partie d'arbre tubulaire (1) en matière plastique renforcée par des fibres et des garnitures en métal (2) pourvues chacune d'un prolongement (4), chaque garniture étant destinée à être introduite et collée dans une extrémité (3) de la partie d'arbre (1), arbre d'entraînement caractérisé en ce que ce prolongement (4) est réalisé avec des saillies (6) parallèles à l'axe, tandis qu'entre le prolongement (4) de la garniture et l'extrémité (3) de la partie d'arbre est disposée une pièce terminale tubulaire (5) présentant sur sa surface interne (8) des cavités (7) qui correspondent aux saillies (6) du prolongement (4), cette pièce terminale étant fixée par adhérence sur la matière plastique renforcée par des fibres de la partie d'arbre (1) tandis que la garniture considérée (2) est collée par son prolongement (4) sur la surface interne (8) de cette pièce terminale.

2. Arbre d'entraînement selon la revendication 1, caractérisé en ce que chaque pièce terminale (5) est engagée à force avec interpénétration de formes dans la partie terminale (3) de la partie d'arbre (1), cette pièce terminale présentant à cet effet, sur sa surface externe (9) au moins un boudin périphérique (10).

3. Arbre d'entraînement selon la revendication 1 ou 2, caractérisé en ce que le prolongement (4) d'au moins une garniture (2) et la section transversale de l'alésage de l'extrémité (5) concernée de l'arbre, sont réalisées de façon identique sous une forme polygonale, par exemple octogonale.

4. Arbre d'entraînement selon une des revendications 1 à 3, caractérisé en ce que les saillies (6) de chaque prolongement (4) et/ou les cavités de chaque pièce terminale (5) sont réalisées en se rétrécissant vers l'intérieur.

5. Arbre d'entraînement selon une des revendications 1 à 4, caractérisé en ce qu'entre la surface externe (12) de chaque prolongement (4) et la surface interne (8) de chaque pièce terminale (5) est disposée une mince couche de collage constituée d'une résine synthétique à base époxy.

6. Arbre d'entraînement selon une des revendications 1 à 5, caractérisé en ce que chaque pièce terminale (5) est réalisée en un métal, par exemple de l'acier ou de l'aluminium.

7. Arbre d'entraînement selon une des revendications 1 à 5, caractérisé en ce que chaque pièce terminale (5) est réalisée en une matière plastique susceptible d'être moulée par coulée ou par injection.

FIG.1

FIG.2

FIG.3

FIG.4